# NOUVEAU FASCICULE DE BREVET EUROPEEN

(11) **EP 0 450 428 B2**
(45) Date de publication et mention de la décision concernant l'opposition: **12.06.2002**
(45) Mention de la délivrance du brevet: 01.03.1995
(21) Numéro de dépôt: 91104516.9
(22) Date de dépôt: 22.03.1991
(51) Int. Cl.: A23L 1/16, A21C 11/16

(54) **Pâte alimentaire du genre "Spaghetti"**
Spaghetti-Teigwaren
Spaghetti-type pasta

(30) Priorité: 28.03.1990 IT 356718
(43) Date de publication de la demande: 09.10.1991
(73) Titulaire: SOCIETE DES PRODUITS NESTLE S.A., 1800 Vevey (CH)
(72) Inventeur: Graverini, Faliero, Arezzo (IT)
(74) Mandataire: Cronin, Brian Harold John

(56) Documents cités:
- DE-A- 3 911 964
- IT-A- 1 630 585
- US-A- 1 591 265
- US-A- 4 752 205
- Italian design n° 46835

## Description

La présente invention concerne le domaine des pâtes alimentaires longues, plus précisément du genre "spaghetti", et plus particulièrement une pâte alimentaire du genre mentionné ci-dessus, laquelle, tout en conservant les caractères particuliers organoleptiques des produits similaires dans le commerce, est caractérisée par une surprenante rapidité de cuisson obtenue par la présence de rainures longitudinales particulières s'étendant sur toute sa longueur.

L'on connaît déjà divers types de "spaghetti" pourvus de rainures longitudinales, pour permettre d'effectuer l'opération de cuisson en un temps inférieur à celui nécessaire pour la même opération avec des produits similaires cylindriques de type percé ("bucatini") ou pleins, lesquels, par ailleurs, ne sont pas exempts d'inconvénients concernant surtout l'homogénéité de la cuisson.

En effet ont été produits, par exemple, des "spaghettis" de section transversale en forme d'étoile dans lesquels au cours de la cuisson se produit un ramollissement excessif des parties formant les pointes par rapport au noyau central, alors que dans d'autres types de plus grand succès ont été adoptées des structures à trois rainures disposées à 120° l'une de l'autre, de façon à former des "spaghettis" de section transversale trifoliée, on a remarqué au cours de la cuisson la tendance à un enchevêtrement réciproque des "spaghettis", qui s'agglutinaient les uns aux autres, avec la conséquence qu'à la fin de la cuisson ils étaient trop crus au centre et trop cuits à l'extérieur.

Le but de la présente invention est de fournir une pâte alimentaire du genre "spaghetti", munie de rainures longitudinales dessinées de façon à créer un produit formé d'un noyau central et de trois lobes longitudinaux équidistants angulairement, où l'équilibre entre forme et dimension des parties qui composent la structure est tel qu'il permet d'obtenir des avantages considérables aussi bien du point de vue de la fabrication que de celui de l'utilisation pendant et après la cuisson par rapport au produit traditionnel existant sur le marché et tel, en outre, qu'il évite les inconvénients précédemment cités liés aux produits similaires rainurés connus.

Les avantages du produit selon la présente invention, remarqués au cours des essais qui ont été effectués, sont les suivants :
- temps de cuisson d'environ 2 minutes selon la méthode traditionnelle (eau en ébullition), c'est-à-dire réduit de plus de 65% par rapport au temps nécessaire pour la cuisson des "spaghettis" de section pleine ayant le même diamètre (cuisson 6-7 minutes);
- possibilité de réduire ultérieurement ce temps de cuisson jusqu'à environ 1 minute en utilisant des machines automatiques spéciales pour la cuisson des pâtes, dans lesquelles l'eau atteint une température de 140°C à une pression de 10 atm;
- productivité sensiblement supérieure par rapport aux formes similaires de pâte longue à cuisson rapide;
- réduction des temps de séchage par rapport aux formes à section pleine, à cause de la forme particulière du produit qui permet une plus facile évaporation de l'eau de l'intérieur;
- une faible quantité de produits défectueux finis suite à l'absence de phénomènes d'instabilité et d'enroulement avec, par voie de conséquence, une réduction des déchets de production et une meilleure adaptabilité dans l'emploi desdites machines de cuisson automatique sans provoquer de noyage lors de l'introduction du produit à l'intérieur de la chambre de cuisson;
- aspect du produit cuit sur l'assiette semblable aux "spaghettis" traditionnels et supérieur à celui des formes similaires à cuisson rapide puisque, pendant la cuisson, lesdites rainures présentes longitudinalement se referment en laissant juste de petites lignes correspondantes externes;
- bonne masticabilité, semblable à celle des "spaghettis" traditionnels de diamètre égal;
- capacité d'absorber les condiments, supérieure à celle des formats traditionnels à cause de la présence desdites rainures longitudinales;
- possibilité d'éviter l'enchevêtrement des "spaghettis" entre eux, en vertu de la forme de la structure du produit, spécialement étudiée, avec par voie de conséquence une parfaite homogénéité de la cuisson.

La présente invention sera mieux illustrée ci-après par la description d'un exemple de réalisation par référence aux dessins annexés, dans lesquels :

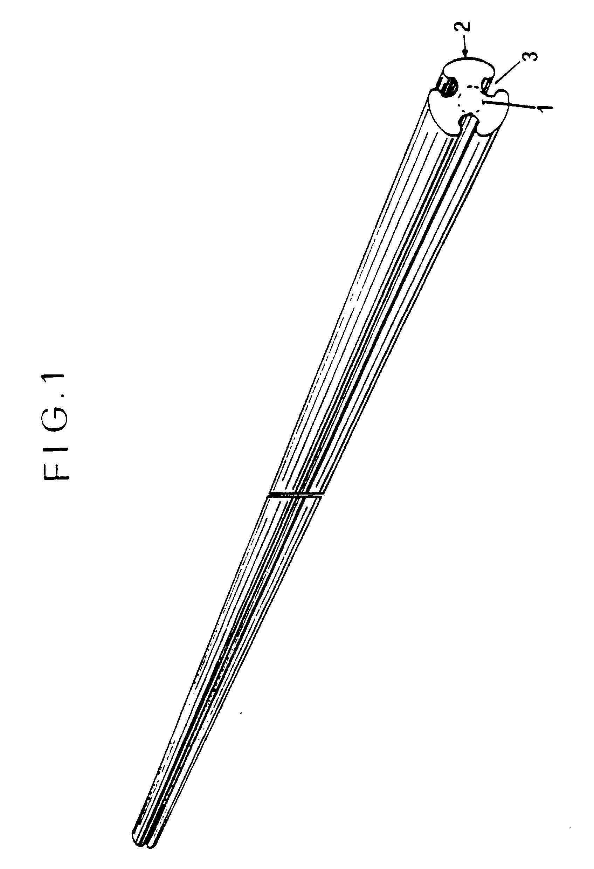

La Figure 1 est une vue en perspective, à une échelle agrandie, d'un produit de pâte alimentaire du type "spaghetti" selon l'invention;

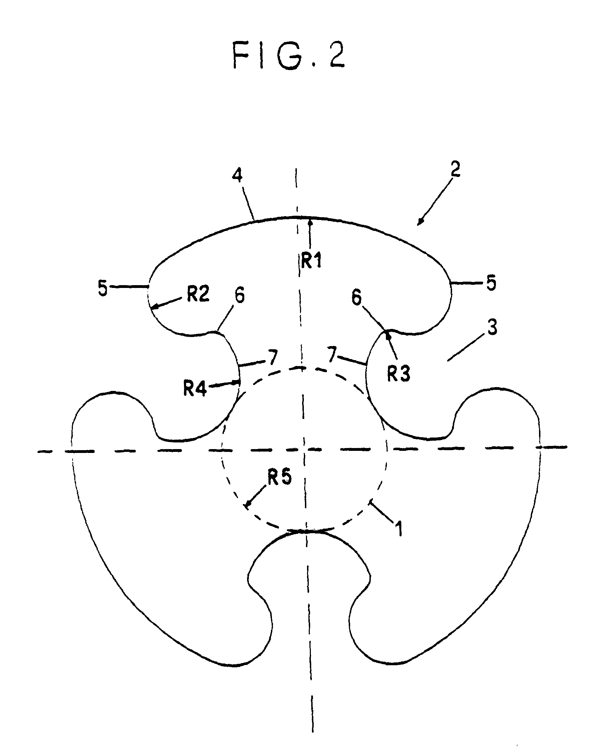

La Figure 2 est une vue en section transversale, à une échelle légèrement agrandie, du produit de la Figure 1.

Comme on peut remarquer d'après les figures ci-dessus, le "spaghetti" de l'invention comprend un noyau central plein 1, de section transversale substantiellement circulaire, en une seul pièce avec trois lobes longitudinaux, parallèles, indiqués génériquement par le chiffre 2, équidistants angulairement de 120° l'un par rapport à l'autre et séparés par des rainures respectives 3.

La forme desdits lobes 2 et des rainures correspondantes 3 a été objet d'études intenses afin de donner au produit de l'invention les avantages déjà décrits par rapport aux produits traditionnels du même genre et ceux similaires rainurés connus.

En particulier, chaque lobe 2 présente en section transversale un contour comprenant une portion de tête convexe en arc de cercle 4, avec un rayon de courbure R1 substantiellement égal à celui d'un "spaghetti" conventionnel plein de même diamètre, dont les extrémités sont raccordées à de premières extrémités de portion latérale respective convexe substantiellement semi-circulaires 5, ayant un rayon de courbure R2 sensiblement inférieur à R1 (environ 1/6), dont les deuxièmes extrémités sont raccordées à travers les respectives portions courbées concaves 6, de faible rayon de courbure R3 (environ 1/3 de R2), à de premières extrémités des respectives portions de tige concaves en arc de cercle 7, ayant un rayon de courbure R4 supérieur à R2 (environ 1,5) mais inférieur à R1 (environ 1/4), dont les deuxièmes extrémités se raccordent aux respectives secondes extrémités des portions de tige 7 des lobes 2 adjacents.

Comme il a déjà été dit, les lobes 2 sont séparés l'un de l'autre par des rainures 3 dont chacune, avec la disposition décrite ci-dessus est définie par le contour opposé des portions latérales convexes 5, des portions de tige concave 7, ainsi que des portions courbes concaves 6, raccordant les deux premières, de lobes 2 adjacents dont résulte une forme élargie dans la partie intérieure et rétrécie dans la partie extérieure de l'embouchure de façon à permettre d'obtenir dans la cuisson lesdits avantages d'éviter l'enchevêtrement réciproque des "spaghettis" et la fermeture des rainures 3.

Exclusivement à titre d'exemple dans une réalisation préférée du "spaghetti" de l'invention les mesures des susdits rayons de courbure des portions composant le contour de la section transversale de chaque lobe 2 sont les suivantes : R1 = 0,765 mm, R2 = 0,135 mm, R3 = 0,045 mm, R4 = 0,207 mm, tandis que celles du rayon R5 de la section transversale circulaires du noyau central plein est de 0,270 mm.

Il est clair qu'il est possible de réaliser des formes avec des dimensions différentes de celles précisées ci-dessus tout en ayant soin, toutefois, de conserver sans les changer les proportions entre forme et mesure.

## Revendications

1. Pâte alimentaire du genre "spaghetti" comprenant un noyau central plein de section transversale circulaire en une seule pièce avec trois lobes longitudinaux, parallèles, équidistants angulairement de 120 l'un de l'autre et séparés par des rainures respectives, chacun desdits lobes présentant en section transversale un contour qui comprend une portion de tête convexe en arc de cercle, avec un rayon de courbure (R1) substantiellement égal à celui d'un "spaghetti" conventionnel plein de même diamètre, dont les extrémités sont raccordées à de premières extrémités de portions latérales respectives convexes pratiquement semi-circulaires, ayant un rayon de courbure (R2) sensiblement inférieur à (R1), dont les deuxièmes extrémités sont raccordées, à travers les respectives portions courbes concaves, de faible rayon de courbure (R3), à de premières extrémités des respectives portions de tige concave en arc de cercle, ayant un rayon de courbure (R4) plus grand que (R2) mais plus faible que (R1), dont les deuxièmes extrémités sont raccordées aux respectives deuxièmes extrémités de portion à tige de lobes adjacents.

2. Pâte alimentaire du genre "spaghetti" selon la revendication 1, où (R2) est environ 1/6 de (R1), (R3) environ 1/3 de (R2), (R4) environ 1,5 de (R2) et environ 1/4 de (R1) et où le rayon (R5) de la section transversale circulaire dudit noyau central plein est environ 2 de (R2).

3. Pâte alimentaire du genre "spaghetti" selon les revendications 1 et 2, où (R1) = 0,765 mm, (R2) = 0,135 mm, (R3) = 0,045 mm, (R4) = 0,207 mm et (R5) = 0,270 mm.

4. Pâte alimentaire du genre "spaghetti" selon l'une quelconque des revendications de 1 à 3, où chacune desdites rainures de séparation desdits lobes longitudinaux est définie par le contour opposé desdites portions latérales convexes, desdites portions de tige concaves ainsi que desdites portions courbes concaves, de raccord des deux premières, des lobes adjacents dont résulte une forme élargie dans la partie inférieure et rétrécie dans la partie extérieure de l'embouchure.

## Claims

1. Pasta of the spaghetti type comprising a solid central core of circular cross section forming a single piece with three parallel longitudinal lobes, equally spaced at angles of 120° from each other and separated by respective grooves, each of the said lobes having in cross section an outline comprising a convex head portion in the form of an arc of a circle, with a radius of curvature (R1) substantially equal to that of a conventional solid spaghetti of the same diameter, whose ends are connected to first ends of respective convex lateral portions, substantially semicircular in shape, having a radius of curvature (R2) substantially smaller than (R1), the second ends of which are connected, by the respective concave curved portions with a small radius of curvature (R3), to first ends of respective concave stem portions in the form of an arc of a circle, having a radius of curvature (R4) greater than (R2) but less than (R1), the second ends of which are connected to the respective second ends of the stem portions of adjacent lobes.

2. Pasta of the spaghetti type according to Claim 1, in which (R2) is approximately 1/6 of (R1), (R3) approximately 1/3 of (R2), (R4) approximately 1.5 times (R2) and approximately 1/4 of (R1) and in which the radius (R5) of the circular cross section of the said solid central core is approximately twice (R2).

3. Pasta of the spaghetti type according to Claims 1 and 2, in which (R1) = 0.765 mm, (R2) = 0.135 mm, (R3) = 0.045 mm, (R4) = 0.207 mm and (R5) = 0.270 mm.

4. Pasta of the spaghetti type according to any one of Claims 1 to 3, in which each of the said grooves separating the said longitudinal lobes is defined by the opposite outlines of the said convex lateral portions, the said concave stem portions, and the said concave curved portions connecting the first two, of adjacent lobes, resulting in a shape wider in the lower area and narrower in the outer area of the mouth.

## Patentansprüche

1. Spaghetti-Teigwaren, umfassend einen vollen zentralen Kern mit kreisförmigem Querschnitt mit drei mit ihm aus einem einzigen Stück bestehenden parallelen Längslappen, die winkelmäßig um 120° in gleichen Abständen voneinander angeordnet sind und durch jeweilige Nuten getrennt sind, wobei jeder dieser Lappen im Querschnitt einen Umriß aufweist, der einen kreisbogenförmigen konvexen Kopfabschnitt mit einem Krümmungsradius (R1) im wesentlichen gleich dem einer herkömmlichen vollen Spaghettinudel vom selben Durchmesser aufweist, dessen Enden an erste Enden von jeweiligen praktisch halbkreisförmigen konvexen Seitenabschnitten mit einem Krümmungsradius (R2), der im wesentlichen kleiner als (R1) ist, anschließen, deren zweite Enden über jeweilige konkave gekrümmte Abschnitte mit kleinem Krümmungsradius (R3) an erste Enden der jeweiligen kreisbogenförmigen konkaven Stielabschnitte mit einem Krümmungsradius (R4), der größer als (R2), aber kleiner als (R1) ist, anschließen, deren zweite Enden an die jeweiligen zweiten Enden von Stielabschnitten benachbarter Lappen anschließen.

2. Spaghetti-Teigwaren nach Anspruch 1, bei denen (R2) ungefähr 1/6 von (R1), (R3) ungefähr 1/3 von (R2), (R4) ungefähr 1/5 von (R2) und ungefähr 1/4 von (R1) ist und bei denen der Radius (R5) des kreisförmigen Querschnitts des vollen zentralen Kerns ungefähr das Zweifache von (R2) ist.

3. Spaghetti-Teigwaren nach Anspruch 1 und 2, bei denen (R1) = 0,765 mm, (R2) = 0,135 mm, (R3) = 0,045 mm, (R4) = 0,207 mm und (R5) = 0,270 mm ist.

4. Spaghetti-Teigwaren nach einem der Ansprüche 1 bis 3, bei denen jede der Nuten zur Trennung der Längslappen definiert ist durch den entgegengesetzten Umriß der konvexen Seitenabschnitte, der konkaven Stielabschnitte sowie der konkaven gekrümmten Abschnitte zur Verbindung der beiden ersten Abschnitte der benachbarten Lappen, aus dem sich eine verbreiterte Form im inneren Teil und eine verjüngte Form im äußeren Teil der Mündung ergibt.
